# EUROPEAN PATENT APPLICATION

(11) **EP 2 742 806 A1**
(43) Date of publication of application: **18.06.2014**
(21) Application number: 12197014.9
(22) Date of filing: 13.12.2012
(51) Int. Cl.: A23G 4/02, A23G 4/04, A23G 4/10

(54) **Process for reducing the stickiness of a chewing gum core composition to a surface of a processing machinery using isomalt**

(71) Applicant: SÜDZUCKER AKTIENGESELLSCHAFT, 68165 Mannheim (DE)
(72) Inventor: Dörr, Tillman, 67591 Hohen-Sülzen (DE); Hasslinger, Bernd, 67316 Carlsberg (DE)
(74) Representative: Wohlfahrt, Jan Günther

(57) **Abstract**

The present invention relates to process for reducing the stickiness of a composition of a chewing gum core to an internal contact surface of a first chewing gum processing machinery in a chewing gum preparation, wherein isomalt is mixed with a chewing gum base composition and to the use of isomalt in a composition of a chewing gum core for reducing stickiness of the composition to the internal contact surface of a chewing processing machinery.

## Description

The present invention relates to process for reducing the stickiness of a composition of a chewing gum core to an internal contact surface of a first chewing gum processing machinery in a chewing gum preparation, wherein isomalt is mixed with a chewing gum base composition and to the use of isomalt in a composition of a chewing gum core for reducing stickiness of the composition to the internal contact surface of a chewing processing machinery.

Chewing gums containing isomalt, which is also called hydrogenated isomaltulose, are known. EP 0 328 849 A2 and WO95/08926 A1 disclose chewing gum compositions with isomalt as bulking agent. US 5,958,472 A discloses the use of granulated isomalt to obtain crunchy chewing gum products.

However, for the production of sugar free chewing gums in the majority of cases maltitol is used instead of isomalt, which maltitol causes undesirable stickiness of the chewing gum composition to the processing apparatus.

The technical problem underlying the present invention is to provide methods and means to reduce the stickiness of a composition of a chewing gum core to surfaces of chewing processing machineries, especially to the surface of the chewing processing machinery in which the composition of a chewing gum core is mixed and produced.

The present invention solves the underlying technical problem by the provision of a process for reducing the stickiness of a composition of a chewing gum core to an internal contact surface of a first chewing gum processing machinery in a chewing gum preparation process according to claim 1.

The present invention solves the underlying technical problem by the provision of a process for reducing the stickiness of a composition of a chewing gum core to an internal contact surface of a first chewing gum processing machinery in a chewing gum preparation process comprising the following steps: a) providing isomalt in an amount suitable to reduce stickiness of the composition to the surface, b) providing a chewing gum base composition and c) mixing the isomalt provided in step a) with the chewing gum base composition provided in step b) and obtaining the isomalt-containing composition of a chewing gum core, wherein step c) is carried out on the internal contact surface of the first chewing gum processing machinery.

Surprisingly, it could be shown that a chewing gum base composition which is mixed with isomalt shows a decreased stickiness to internal contact surfaces of machines, especially metal- or alloy-surfaces of machineries which are used for the production of chewing gums. Surprisingly, it could also be shown that the chewing gum base shows reduced stickiness already to the machinery in which the chewing gum base composition is mixed with the isomalt, for example a kneader.

In a preferred embodiment of the present invention, the stickiness is reduced in comparison to an amount equivalent maltitol and/or sorbitol-containing composition of a chewing gum core.

In a preferred embodiment of the present invention, the stickiness is reduced in comparison to an amount equivalent maltitol-containing composition of a chewing gum core.

In a preferred embodiment of the present invention, the stickiness is reduced in comparison to an amount equivalent sorbitol-containing composition of a chewing gum core.

In a preferred embodiment of the present invention, the stickiness is reduced in comparison to an amount equivalent maltitol-sorbitol-mixture-containing composition of a chewing gum core.

In the context of the present invention, an "amount equivalent maltitol-containing composition of a chewing gum core" is a composition of a chewing gum core which contains the same ingredients in the same amount as the composition of a chewing gum core obtained in step c) beside that the isomalt is exchanged by the same amount of maltitol, calculated in weight.

In the context of the present invention, an "amount equivalent sorbitol-containing composition of a chewing gum core" is a composition of a chewing gum core which contains the same ingredients in the same amount as the composition of a chewing gum core obtained in step c) beside that the isomalt is exchanged by the same amount of sorbitol, calculated in weight.

In the context of the present invention, an "amount equivalent maltitol-sorbitol-mixture-containing composition of a chewing gum core" is a composition of a chewing gum core which contains the same ingredients in the same amount as the composition of a chewing gum core obtained in step c) beside that the isomalt is exchanged by the same amount of a maltitol-sorbitol-mixture, calculated in weight.

In the context of the present invention the reduction of stickiness is measured by comparing the stickiness obtained by the method of the present invention obtaining an isomalt-containing composition of a chewing gum core with the stickiness obtained by a method obtaining an amount equivalent maltitol-containing composition of a chewing gum core and/or with the stickiness obtained by a method obtaining an amount equivalent sorbitol-containing composition of a chewing gum core and/or with the stickiness obtained by a method obtaining an amount equivalent maltitol-sorbitol-mixture-containing composition of a chewing gum core.

In the context of the present invention the stickiness is measured as rests of a composition of a chewing gum core in the inner contact surface of a kneader after the composition of a chewing gum core is discharged after step c), wherein no force is used to scrap or scratch the composition of a chewing gum core out of the kneader. The stickiness is measured as the weight-% of the rests in relation to the complete composition of a chewing gum core obtained in step c).

Preferably a kneader is used as described in the example of the present disclosure. More preferably the stickiness is measured as outlined above using a sigma kneading machine IP 25 AP/T-CG from Gabler GmbH & Co. KG, Ettlingen, Germany, having a maximum working capacity of 17.5 litres. Preferably a rotation speed of at least 15 rpm to at most 45 rpm is used. Preferably the stickiness is measured by as outlined above by a cleanout of the kneader with overturning the motorized vessel at an angle of 100°.

The stickiness is measured by comparing the stickiness of compositions of a chewing gum core having the same total weight. Preferably, the total weight used to measure the stickiness in a kneader as outlined above and described in the example is 10 kg.

The temperature at which the stickiness in a kneader as outlined above and described in the example is measured is from at least 30°C to at most 70 °C, preferably around 50 °C, most preferably 50 °C.

For measuring the stickiness, the mixture is kneaded for around 60 minutes, more preferably for 60 minutes. Preferably for measuring the stickiness half of the polyol to be added is added before starting the kneading process and the other half of the polyol is added after 30 minutes of kneading, wherein the mixture is kneaded in total for 60 minutes.

Preferably the stickiness is measured as shown in the example.

Preferably only less than 5 weight-%, even more preferably less than 4 weight-% of the total isomalt-containing composition of a chewing gum core stick to the surface of the kneader if measured as outlined above.

In a preferred embodiment of the present invention, a reduction in stickiness of at least 25%, more preferably of at least 30%, even more preferably of at least 50%, even more preferably of at least 75% or of at least 90% compared to maltitol, sorbitol or maltitol-sorbitol-mixtures containing composition of a chewing gum cores is obtained.

In a preferred embodiment of the present invention, the process according to the present invention is for intentionally reducing the stickiness of a composition of a chewing gum core to an internal contact surface of the first chewing gum processing machinery in a chewing gum preparation process. The term "intentionally" means that the purpose of reducing the stickiness is purposefully desired, recognized and achieved and is not solely reached by chance and/or unrecognized.

In the context of the present invention, a "contact surface" or an "internal contact surface" is a surface of a chewing gum processing machinery which comes into contact with the composition of a chewing gum core during the process according to the present invention on purpose, i.e. a surface which is designed to get into contact with the composition of a chewing gum core during the production-process. Such an internal contact surface is for example the inner surface of a kneading chamber of a kneader. The skilled person knows which chewing gum processing machineries can be used and which parts, i.e. which internal contact surfaces, come into contact with the composition of a chewing gum core during the production.

Preferably, the temperature at which step c) is performed is from at least 30 °C to at most 70 °C, more preferably around 50 °C.

In a preferred embodiment of the present invention, the process according to the present invention comprises the further step d) subjecting the obtained isomalt-containing composition of a chewing gum core to a surface of a second chewing gum processing machinery.

In a preferred embodiment of the present invention, the process is for reducing, more preferably intentionally reducing, the stickiness of a composition of a chewing gum core to an internal contact surface of the second chewing gum processing machinery in a chewing gum preparation process.

In a preferred embodiment of the present invention, the internal contact surface of the first chewing gum processing machinery is made of at least one inorganic material. In a preferred embodiment of the present invention, the internal contact surface of the first chewing gum processing machinery is made of metal or alloy. In a preferred embodiment of the present invention, the internal contact surface of the first chewing gum processing machinery is made of a metal or an alloy. In a preferred embodiment of the present invention, the internal contact surface of the first chewing gum processing machinery is made of steel. In a preferred embodiment of the present invention, the internal contact surface of the first chewing gum processing machinery is made of stainless steel.

In a preferred embodiment of the present invention, the internal contact surfaces of the first and the second chewing gum processing machinery are made of at least one inorganic material. In a preferred embodiment of the present invention, the internal contact surfaces of the first and the second chewing gum processing machinery are made of a metal or an alloy. In a preferred embodiment of the present invention, the internal contact surfaces of the first and the second chewing gum processing machinery are made of steel. In a preferred embodiment of the present invention, the internal contact surfaces of the first and the second chewing gum processing machinery are made of stainless steel.

A person skilled in the art knows suitable machineries for producing chewing gums and suitable machinery surface materials coming into contact with the chewing gum base composition.

In a preferred embodiment of the present invention, the first chewing gum processing machinery is a sigma-mixer, for example a double arm sigma-mixer.

In a preferred embodiment of the present invention, the first chewing gum processing machinery is a kneader. In a preferred embodiment of the present invention, the first chewing gum processing machinery is a Z-kneader or a double-Z-kneader.

In a preferred embodiment of the present invention, the second chewing gum processing machinery is an extruder.

In a preferred embodiment of the present invention the amount of isomalt provided in step a) is at least 10 weigth-% of the obtained isomalt-containing composition of a chewing gum core obtained in step c).

In a preferred embodiment of the present invention the amount of isomalt provided in step a) is at least 20 weigth-% of the obtained isomalt-containing composition of a chewing gum core obtained in step c).

In a preferred embodiment of the present invention the amount of isomalt provided in step a) is at least 40 weigth-% of the obtained isomalt-containing composition of a chewing gum core obtained in step c).

In a preferred embodiment of the present invention the amount of isomalt provided in step a) is at most 70 weigth-% of the obtained isomalt-containing composition of a chewing gum core obtained in step c).

In a preferred embodiment of the present invention the amount of isomalt provided in step a) is at most 60 weigth-% of the obtained isomalt-containing composition of a chewing gum core obtained in step c).

In a preferred embodiment of the present invention the amount of isomalt provided in step a) is at least 20 weigth-% and at most 60 weight-% of the obtained isomalt-containing composition of a chewing gum core obtained in step c).

In a preferred embodiment of the present invention the amount of isomalt provided in step a) is around 54 weigth-% of the obtained isomalt-containing composition of a chewing gum core obtained in step c).

In the context of the present invention, the term "isomalt" or "hydrogenated palatinose" preferably encompasses an isomalt component.

In the context of the present invention, the term "isomalt component" preferably encompasses isomalt, isomalt ST, isomalt GS, an isomalt variant or component thereof. Isomalt is also known as palatinit^{®}.

In a preferred embodiment of the present invention, the isomalt is selected from the group consisting of 1,1-GPS (1-O-α-D-glucopyranosyl-D-sorbitol), 1,1-GPM (1-O-α-D-glucopyranosyl-D-mannitol), 1,6-GPS (6-O-α-D-glucopyranosyl-D-sorbitol), isomalt, isomalt ST and isomalt GS.

In the context of the present invention, isomalt is a mixture of 1,6-GPS and 1,1-GPM, while isomalt ST is a mixture of 53 to 47% 1,6-GPS and 47 to 53% 1,1-GPM. Isomalt GS is a mixture of 71 to 79% 1,6-GPS and 29 to 21% 1,1-GPM, preferably 75% 1,6-GPS to 25% 1,1-GPM (values given in weight-% on dry matter).

In a further preferred embodiment, it is foreseen to use isomalt variants. In the context of the present invention, isomalt variants are for instance mixtures of 10 to 50% 1,6-GPS, 2 to 20% 1,1-GPS and 30 to 70% 1,1-GPM or mixtures of 5 to 10% 1,6-GPS, 30 to 40% 1,1-GPS and 45 to 60% 1,1-GPM. Isomalt variants may also be in form of 1,6-GPS or 1,1-GPM enriched mixtures. 1,6-GPS enriched mixtures have an 1,6-GPS amount of 58 to 99 % and an 1,1-GPM amount of 42 to 1 %. 1,1-GPM enriched mixtures have an 1,6-GPS amount of 1 to 42 % and an 1,1-GPM amount of 58 to 99 % (values given in weight-% on dry matter).

If not outlined else, %-values given the in present description mean weight-% on dry matter.

In a further preferred embodiment of the present invention the isomalt particles have a diameter of at most 1000 µm. More preferably the particles have a diameter of at most 700 µm. Alternatively, the particles can have a diameter of at least 700 µm. In a further preferred embodiment of the present invention the isomalt particles have a diameter of at most 1000 µm and of at least 700 µm. In a preferred embodiment the particles have a diameter of at least 50 µm. More preferably the particles have a diameter of at least 100 µm. The particles can also have a diameter of less than 100 µm, preferably less than 50 µm.

In a further preferred embodiment of the present invention, the isomalt component used is a milled and agglomerated isomalt, in particular a milled and agglomerated isomalt, wherein the milled isomalt particles have a diameter of at most 1000 µm. More preferably the milled particles have a diameter of at most 700 µm. In a preferred embodiment the milled particles have a diameter of at least 50 µm. More preferably the milled particles have a diameter of at least 100 µm. The milled particles can also have a diameter of less than 100 µm, preferably less than 50 µm. Preferably, such a milled and agglomerated isomalt is isomalt DC.

The particle size distribution of isomalt is preferably measured by laser diffraction. More preferably, the particle size is measured by laser diffraction using the Mastersizer 2000, made by MALVERN Instruments. With the aid of laser diffraction measurement, the particle size distribution of Isomalt can be ascertained for quality evaluation. The measuring principle is preferably based on dispersed light/laser diffraction spectroscopy according to ISO 13320. Isolated particles are brought into a laser beam in a low concentration. The particles are introduced by aspirating isomalt into the measuring cell ("dry measurement"). Depending on the diameter of the particles, the laser light is diffracted, which is recorded by detectors as scattered rays. The measuring results are initially extant in the form of the light intensities measured by the detectors and must be converted into a particle size distribution. This occurs by means of the associated evaluation software for the particles given here > 1 µm through an approximation by Joseph von Fraunhofer. The dosage of the samples (around 20 g) is preferably carried out using a riddle sieve with channel and adjustable gap width. A fine sieve with several balls is preferably used as a sieve insert. The dosage (gap width) must be set in such a way that the measuring concentration is attained. Air with an overpressure of 2.5 bar can be used as a dispersing medium. A person skilled in the art knows the relevant measuring parameters.

In a preferred embodiment of the present invention, no isomaltulose is provided in step a).

In an alternative embodiment of the present invention, a mixture of isomalt and isomaltulose is provided in step a).

In a preferred embodiment of the present invention, the chewing gum base composition provided in step b) comprises at least one water insoluble chewing gum base component.

In the context of the present invention the term "comprising" preferably has the meaning of "containing" or "including" meaning that the composition in question at least comprises the specifically identified component without excluding the presence of further components. However, in a preferred embodiment the term comprising is also understood to have the meaning of "consisting essentially of" and in a most preferred embodiment of "consisting". The term "consisting essentially of" excludes the presence of substantial amounts of further components except the specifically identified component of the composition. The term "consisting" excludes the presence of any further compound, no matter in which quantity in the composition identified. In the context of the present invention the term "comprising essentially" preferably has the meaning that the specifically identified component is the component with the highest proportion in the composition in question compared to the components present in the composition in question. However, in a preferred embodiment the term "comprising essentially" means that the composition in question comprises at least 50 % by weight, even more preferably at least 51 % by weight of the specifically identified component.

In the context of the present invention the term "at least one" preferably has the meaning that one component or more than one components, for example two, three or more components are present.

In a preferred embodiment of the present invention, the chewing gum base composition provided in step b) comprises at least one chewing gum base component selected from the group consisting of at least one sweetener component, at least one high intensity sweetener component, at least one flavouring component, at least one colouring component and at least one rolling component.

In a preferred embodiment of the present invention, the chewing gum base composition provided in step b) comprises no sugar alcohol selected from the group consisting of maltitol, mannitol, xylitol, sorbitol, erythritol and mixtures thereof. In a preferred embodiment of the present invention, the chewing gum base composition provided in step b) comprises no sugar alcohol selected from the group consisting of mannitol, xylitol, sorbitol, erythritol and mixtures thereof.

In a preferred embodiment of the present invention, the chewing gum base composition provided in step b) comprises no maltitol. In a preferred embodiment of the present invention, the chewing gum base composition provided in step b) comprises no mannitol. In a preferred embodiment of the present invention, the chewing gum base composition provided in step b) no xylitol. In a preferred embodiment of the present invention, the chewing gum base composition provided in step b) comprises no sorbitol. In a preferred embodiment of the present invention, the chewing gum base composition provided in step b) comprises no erythritol.

In a preferred embodiment of the present invention, the chewing gum base composition provided in step b) comprises sorbitol. In a preferred embodiment of the present invention, the chewing gum base composition provided in step b) comprises maltitol. In a preferred embodiment of the present invention, the chewing gum base composition provided in step b) comprises maltitol and sorbitol.

Accordingly, in a preferred embodiment of the present invention, the composition of a chewing gum core obtained in step c) comprises sorbitol and/or maltitol.

In a preferred embodiment of the present invention, the composition of a chewing gum core obtained in step c) comprises at least 20 weight-% sorbitol (referring to the total weight amount of the obtained isomalt-containing composition of a chewing gum core).

In a preferred embodiment of the present invention, the composition of a chewing gum core obtained in step c) comprises at least 20 weight-% maltitol (referring to the total weight amount of the obtained isomalt-containing composition of a chewing gum core).

In a preferred embodiment of the present invention, the composition of a chewing gum core obtained in step c) comprises at most 49 weight-% sorbitol (referring to the total weight amount of the obtained isomalt-containing composition of a chewing gum core).

In a preferred embodiment of the present invention, the composition of a chewing gum core obtained in step c) comprises at most 49 weight-% maltitol (referring to the total weight amount of the obtained isomalt-containing composition of a chewing gum core).

In a preferred embodiment of the present invention, the composition of a chewing gum core obtained in step c) comprises at least 20 weight-% sorbitol and/or maltitol (referring to the total weight amount of the obtained isomalt-containing composition of a chewing gum core). In a preferred embodiment of the present invention, the composition of a chewing gum core obtained in step c) comprises at most 50 weight-% sorbitol and/or maltitol (referring to the total weight amount of the obtained isomalt-containing composition of a chewing gum core). In a preferred embodiment of the present invention, the composition of a chewing gum core obtained in step c) comprises at least 21 weight-% sorbitol and/or maltitol (referring to the total weight amount of the obtained isomalt-containing composition of a chewing gum core). In a preferred embodiment of the present invention, the composition of a chewing gum core obtained in step c) comprises at most 49 weight-% sorbitol and/or maltitol (referring to the total weight amount of the obtained isomalt-containing composition of a chewing gum core).

In a preferred embodiment of the present invention, the composition of a chewing gum core obtained in step c) comprises at least 20 weight-% and at most 50 weight-% sorbitol and/or maltitol (referring to the total weight amount of the obtained isomalt-containing composition of a chewing gum core) and at least 10 weight-% and at most 50 weight-% isomalt (referring to the total weight amount of the obtained isomalt-containing composition of a chewing gum core). In a preferred embodiment of the present invention, the composition of a chewing gum core obtained in step c) comprises at least 21 weight-% and at most 49 weight-% sorbitol and/or maltitol (referring to the total weight amount of the obtained isomalt-containing composition of a chewing gum core) and at least 25 weight-% and at most 45 weight-% isomalt (referring to the total weight amount of the obtained isomalt-containing composition of a chewing gum core). In a preferred embodiment of the present invention, the composition of a chewing gum core obtained in step c) comprises around 20 weight-% sorbitol and/or maltitol (referring to the total weight amount of the obtained isomalt-containing composition of a chewing gum core) and around 30 weight-% weight-% isomalt (referring to the total weight amount of the obtained isomalt-containing composition of a chewing gum core).

In a preferred embodiment of the present invention, the composition of a chewing gum core obtained in step c) comprises at least 10 weight-% and at most 30 weight-% sorbitol (referring to the total weight amount of the obtained isomalt-containing composition of a chewing gum core), at least 10 weight-% and at most 20 weight-% maltitol (referring to the total weight amount of the obtained isomalt-containing composition of a chewing gum core) and at least 30 weight-% and at most 45 weight-% isomalt (referring to the total weight amount of the obtained isomalt-containing composition of a chewing gum core).

In a preferred embodiment of the present invention, the composition of a chewing gum core obtained in step c) comprises at least 40 weight-% and at most 60 weight-% of at least one sugar alcohol (referring to the total weight amount of the obtained isomalt-containing composition of a chewing gum core).

In a preferred embodiment of the present invention, the chewing gum base composition provided in step b) is sugar-free. In a further preferred embodiment, the chewing gum base composition provided in step b) is free of sucrose, free of glucose, free of lactose and/or free of fructose or free of combinations of at least two of these sugars.

In a preferred embodiment of the present invention, the chewing gum base composition provided in step b) is tooth-friendly.

In a preferred embodiment of the present invention, the chewing gum base composition provided in step b) is sugar-free, in particular free of sucrose, free of glucose, free of lactose and/or free of fructose or free of combinations of at least two of these sugars.

In a preferred embodiment of the present invention, the chewing gum base composition provided in step b) comprises at least one tooth-friendly sugar or sugar alcohol.

In a preferred embodiment of the present invention, the at least one tooth-friendly sugar in the chewing gum base composition provided in step b) is selected from the group consisting of isomaltulose, nutriose, leukrose and polydextrose. In a further preferred embodiment, the amount of non-tooth-friendly ingredients is at maximum 1 weight-% (referring to the total weight amount of the obtained isomalt-containing composition of a chewing gum core).

In a further preferred embodiment of the present invention, the at least one tooth-friendly sugar alcohol in the chewing gum base composition provided in step b) is selected from the group of xylitol, mannitol, maltitol, erythritol, lactitol or sorbitol.

In an alternative embodiment of the present invention, the composition of a chewing gum core obtained in step c) comprises at least 50 weight-% and at most 75 weight-% of at least one sugar (referring to the total weight amount of the obtained isomalt-containing composition of a chewing gum core).

In a preferred embodiment of the present invention, the chewing gum base composition provided in step b) comprises further at least one additives.

In a preferred embodiment of the present invention, the at least one additive is selected from the group consisting of sugars, preferably tooth-friendly sugars, sugar alcohols, intense sweeteners, hydrocolloid, gum base, plastifiers, lubricant, emulsifiers, protein components, milk components, dairy ingredients, fat and fat substitutes, vegetable fat, vitamins, minerals, pharmaceutically active ingredients, preservatives, aroma, flavourings, such as peppermint, menthol, fruit, strawberry flavour, colours, TiO₂, edible acids, such as citric acid, and dietary fibres.

In a preferred embodiment of the present invention, the chewing gum base composition provided in step b) is a chewing gum base composition known in the state of the art. A person skilled in the art knows suitable chewing gum base compositions.

In a preferred embodiment of the present invention, the composition of a chewing gum core obtained in step c) consists essentially of the isomalt provided in step a) and the chewing gum base composition provided in step b). In a preferred embodiment of the present invention, the composition of a chewing gum core obtained in step c) consists of the isomalt provided in step a) and the chewing gum base composition provided in step b).

In a particularly preferred embodiment of the present invention, the isomalt is the only sweetening agent present in the composition of a chewing gum core obtained in step c). In a further preferred embodiment of the present invention, the isomalt is the only sugar alcohol present in the composition of a chewing gum core obtained in step c). In a further preferred embodiment, the isomalt is the only sweetening agent providing a body to the composition of a chewing gum core obtained in step c). Thus, in this preferred embodiment, in addition to the isomalt, an intense sweetener may also be present the composition of a chewing gum core obtained in step c).

In a further preferred embodiment of the present invention, the isomalt, maltitol and sorbitol are the only sugar alcohols present in the composition of a chewing gum core obtained in step c).

In a further preferred embodiment of the present invention, the isomalt, and either maltitol or sorbitol are the only sugar alcohols present in the composition of a chewing gum core obtained in step c).

In a further preferred embodiment of the present invention, the isomalt and sorbitol are the only sugar alcohols present in the composition of a chewing gum core obtained in step c). In a further preferred embodiment of the present invention, the isomalt and maltitol are the only sugar alcohols present in the composition of a chewing gum core obtained in step c).

In a preferred embodiment, the composition of a chewing gum core obtained in step c) comprises an intense sweetener.

In a preferred embodiment of the present invention, the intense sweetener is selected from the group of cyclamate, saccharin, aspartame, glycyrrhicine, neohesperidine-dihydrochalcone, steviol glycosides, thaumatin, monellin, acesulfame, alitame, sucralose or a mixture thereof. The steviol glycosides can be for example stevioside or rebaudioside A.

After the ingredients have been thoroughly mixed or kneaded, in step c) the composition of a chewing gum core is preferably discharged from the mixer or kneader and shaped into the desired form such as by rolling into sheets and cutting into sticks, extruding into chunks or casting into pellets. Generally, ingredients of the chewing gum core material are mixed by first melting the gum base and adding it into the running mixer. The base may also be melted in the mixer itself. Colour or emulsifiers may also be added at this time. A softener such as glycerine may also be added at this time along with syrup and a portion of bulking agent. Further portions of the bulking agent may then be added to the mixer. A flavouring agent is typically added with a final portion of the bulking agent. The entire mixing or kneading procedure typically takes from 5 to 50 minutes, but longer mixing times may sometimes be required. Those skilled in the art will recognise that many variations of the above-described procedure may be followed.

The isomalt provided in step a) can be added to the first chewing gum processing machinery before or after adding the chewing gum base composition provided in step b). The isomalt provided in step a) can also be added during the mixing of the components of the chewing gum base composition provided in step b). The isomalt provided in step a) can also be added stepwise.

The present invention solves the underlying technical problem also by the use of isomalt in a composition of a chewing gum base for reducing the stickiness of the composition to the internal contact surface of a chewing gum processing machinery. Preferred embodiments of the use according to the present invention concerning the isomalt, the chewing gum base composition, the composition of a chewing gum core and/or the chewing gum processing machinery are outlined in the description of the process according to the present invention.

In a preferred embodiment, the isomalt is used intentionally for reducing the stickiness of the composition to the internal contact surface of a chewing gum processing machinery.

In a preferred embodiment of the present invention, the isomalt is used for reducing the stickiness of the composition to the internal contact surface of a chewing gum processing machinery, wherein the stickiness is reduced in comparison to an amount equivalent maltitol-containing composition of a chewing gum core.

The present invention solves the underlying technical problem also by the provision of an isomalt-containing composition of a chewing gum core, preferably produced in the process according to the present invention, wherein the composition of a chewing gum core has a reduced stickiness to the internal contact surface of a chewing gum processing machinery. Preferred embodiments of the isomalt-containing composition of a chewing gum core according to the present invention concerning the isomalt, the chewing gum base composition, the composition of a chewing gum core and/or the chewing gum processing machinery are outlined in the description of the process according to the present invention.

The present invention solves the underlying technical problem by the provision of a chewing gum core made from the composition of a chewing gum core obtained in step c). In a preferred embodiment the chewing gum core is provided as a sheet.

In a preferred embodiment of the present invention, the chewing gum core is a filled or non-filled chewing gum core.

The present invention solves the underlying technical problem by the provision of a chewing gum product comprising the composition of a chewing gum core obtained in step c). The chewing gum products may be coated or non-coated chewing gum products. Thus, the present invention foresees in one embodiment to provide non-coated chewing gum products such as chewing gum sticks. In another preferred embodiment the present invention foresees to coat the chewing gum product prepared according to the present invention with at least one layer of coating material so as to produce a coated chewing gum product and wherein said at least one layer is enveloping the rolling compound present on the surface of the chewing gum core material.

Further preferred embodiments of the present invention are the subject matter of the subclaims.

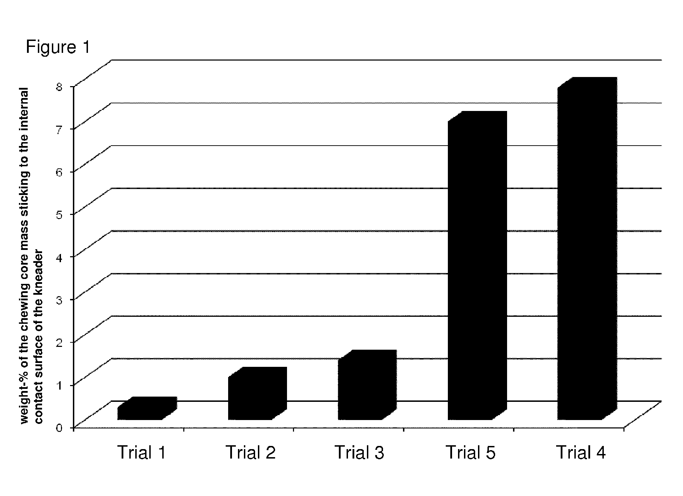

Figure 1 shows the calculated rests of compositions of chewing gum cores obtained from step c) according to the invention in comparison to rests of compositions of chewing gum cores obtained from step c) according to the state of the art.

The invention is illustrated by way of the following examples and figure 1:

### Example: Kneading of chewing gum base compositions with isomalt or without isomalt

Following receipts were used:

**Table 1:**

| | Trial 1 | Trial 2 | Trial 3 | Trial 4 | Trial 5 |
|---|---|---|---|---|---|
| gum base | 32% | 32% | 32% | 32% | 32% |
| isomalt | 54% | 27% | 10% | | |
| sorbitol | | 27% | 44% | 27% | 54% |
| maltitol | | | | 27% | |
| lycasin | 10,6% | 10,6% | 10,6% | 10,6% | 10,6% |
| peppermint oil | 1,8% | 1,8% | 1,8% | 1,8% | 1,8% |
| menthol | 1,4% | 1,4% | 1,4% | 1,4% | 1,4% |
| acesulfame K | 0,1% | 0,1% | 0,1% | 0,1% | 0,1% |
| aspartame | 0,1% | 0,1% | 0,1% | 0,1% | 0,1% |

| | | | | | |
|---|---|---|---|---|---|
| % are weight-%. | | | | | |

Trials 1, 2 and 3 are receipts according to the present invention. Trials 4 and 5 containing no isomalt are receipts according to the state of the art.

As kneader a Sigma kneading machine IP 25 AP/T-CG from Gabler GmbH & Co KG, Ettlingen, Germany was used. This kneader has a maximal working capacity of 17.5 litres. The rotation of the kneader can be from 15 to 45 rpm. The working temperature of the kneader can be from 5°C to 90 °C. The cleanout of the kneader is done with overturning the vessel (motorized; angle 100°).

Gum base, lycasin and half of the polyol amount was mixed in the kneader for 30 minutes. Sweeteners, flavours and the second half of polyols were added and the mixture was kneaded for further 30 minutes. All compounds were added in a given amount. The according total amount of the kneaded mixture was 10 kg.

The temperature during the kneading procedure was 50°C.

The kneader was emptied by discharging the mass without scratching residual amounts of the mass out of kneader. The mass discharged from the kneader was weighted to compare the rests of compositions of chewing gum cores in the kneader. Furthermore the inner surface of the kneader was photographed to make the differences visible on pictures.

The results for the calculated rests of compositions of chewing gum cores for the different trials are shown in figure 1 and table 2.

**Table 2:**

| | Trial 1 | Trial 2 | Trial 3 | Trial 4 | Trial 5 |
|---|---|---|---|---|---|
| weight-% | < 0.3 | ca. 1 | ca. 1.4 | ca. 7.8 | ca. 7 |

The given numbers represent the calculated weight-% of the mass sticking on the inner surface of the kneader after discharging in relation to the total mass mixed in the kneader.

Trials 1, 2 and 3 show much better results in view of stickiness compared to trials 4 and 5.

This was also visible from the pictures.

Using isomalt the cleaning process after kneading is reduced in comparison to sorbitol or maltitol.

The use of the isomalt results in reduced remaining material when emptying the batch, thus increased capacity, easier cleaning and reduced thermal load of the remaining material. These are all value-increasing features when producing chewing gums.

## Claims

1. A process for intentionally reducing the stickiness of a composition of a chewing gum core to an internal contact surface of a first chewing gum processing machinery in a chewing gum preparation process comprising the following steps:
a) providing isomalt in an amount suitable to reduce stickiness of the composition to the surface,
b) providing a chewing gum base composition and
c) mixing the isomalt provided in step a) with the chewing gum base composition provided in step b) and obtaining the isomalt-containing composition of a chewing gum core,
wherein step c) is carried out on the internal contact surface of the first chewing gum processing machinery and wherein the stickiness is reduced in comparison to an amount equivalent maltitol-containing composition of a chewing gum core, to an amount equivalent sorbitol-containing composition of a chewing gum core and/or to an amount equivalent maltitol-sorbitol-mixture-containing composition of a chewing gum core.

2. The process according to claim 1, comprising the further step:
d) subjecting the obtained isomalt-containing composition of a chewing gum core to an contact surface of a second chewing gum processing machinery.

3. The process according to claim 1 or claim 2, wherein the internal contact surface of the first and the contact surface of the second chewing gum processing machinery is made of steel, preferably stainless steel.

4. The process according to claim 1 or claim 2, wherein the first chewing gum processing machinery is a kneader.

5. The process according to claim 2, wherein the second chewing gum processing machinery is an extruder.

6. The process according to any one of claims 1 to 5, wherein the chewing gum base composition comprises at least one water insoluble chewing gum base component.

7. The process according to any one of claims 1 to 6, wherein the chewing gum base composition provided in step b) comprises at least one chewing gum base component selected from the group consisting of at least one sweetener component, at least one high intensity sweetener component, at least one flavouring component, at least one colouring component and at least one rolling component.

8. The process according to any one of claims 1 to 7, wherein the stickiness is reduced in comparison to an amount equivalent maltitol-containing composition of a chewing gum core.

9. The process according to any one of claims 1 to 7, wherein the stickiness is reduced in comparison to an amount equivalent sorbitol-containing composition of a chewing gum core.

10. Use of isomalt in a composition of a chewing gum base for reducing stickiness of the composition to the internal contact surface of a chewing gum processing machinery.

11. Use according to claim 10, wherein the stickiness is reduced intentionally in comparison to an amount equivalent maltitol-containing composition of a chewing gum core, to an amount equivalent sorbitol-containing composition of a chewing gum core and/or to an amount equivalent maltitol-sorbitol-mixture-containing composition of a chewing gum core.
